# EUROPÄISCHE PATENTSCHRIFT

(11) **EP 2 364 832 B1**
(45) Veröffentlichungstag und Bekanntmachung des Hinweises auf die Patenterteilung: **08.01.2014**
(21) Anmeldenummer: 09450038.6
(22) Anmeldetag: 19.02.2009
(51) Int. Cl.: B29C 31/00, B29C 31/08, B21D 43/10, F16D 69/04, B30B 15/02

(54) **Anlage zur Produktion von Bremsbelägen**
Assembly for producing brake linings
Installation de production de garnitures de frein

(30) Priorität: 21.12.2007 AT 76107 U
(43) Veröffentlichungstag der Anmeldung: 14.09.2011
(73) Patentinhaber: IAG Industrie Automatisierungsgesellschaft mbH, 2722 Weikersdorf (AT)
(72) Erfinder: Brunner, Ernst, Ing., 2630 Ternitz (AT); Pokorny, Olaf, Ing., 2722 Winzendorf (AT)
(74) Vertreter: Rippel, Andreas

(56) Entgegenhaltungen:
- DE-A1- 2 441 965
- DE-A1- 2 736 388
- DE-A1- 3 736 813
- US-A- 4 923 661

## Beschreibung

Die Erfindung bezieht sich auf eine Anlage zur Produktion von Bremsbelägen, mit einer Mehrzahl von in Linie angeordneten Pressen, welche die in Pressformen gefüllte Reibmasse nach Auflegen von Rückenplatten pressen, wobei eine zentrale Magazineinheit mit einem bis zu vorzugsweise sechs Magazinen angeordnet ist.

Bei bekannten Anlagen verfügt jede Presse über ein Beschickungs- und Verteilsystem für die Reibmasse und eventuell die Zwischenschicht, ein Rückenplattenmagazin mit Manipulator sowie eine Bürst- und Sprüheinheit.

Diese Anlagen haben sich bereits bestens bewährt, sind allerdings verhältnismäßig aufwendig aufgebaut.

In der US 4,923,661 A ist eine Anlage der eingangs genannten Art beschrieben und gezeigt, bei der ein Beschickungsmanipulator für die Rückenplatten vorgesehen ist, der die Rückenplatten für alle Pressen aufnimmt und in einem Arbeitsgang alle Pressen beschickt. Es ist daher nicht oder nur schwer möglich, die einzelnen Pressen mit verschiedenen Rückenplatten zu beschicken.

Bei der Anlage nach dieser Patentschrift ist jede Presse mit einem Manipulator zur Abnahme und Reinigung ausgestattet. Dies bedeutet einen verhältnismäßig großen konstruktiven Aufwand.

Die Erfindung hat es sich zum Ziel gesetzt, eine Anlage zu schaffen, die einfacher aufgebaut ist und trotzdem für die verschiedensten Aufgaben eingesetzt werden kann.

Erreicht wird dies dadurch, dass die Anlage ferner aufweist: einen gemeinsamen, jede Presse gesondert bedienenden Beschickungsmanipulator für die Rückenplatten, einen gemeinsamen, mit dem Beschickungsmanipulator eventuell vereinigten Abnahmemanipulator für die gepressten Beläge, eine gemeinsame Bürst-Sprüheinheit, sowie eine zentrale Ablage bzw. Übergabestelle für alle Beläge.

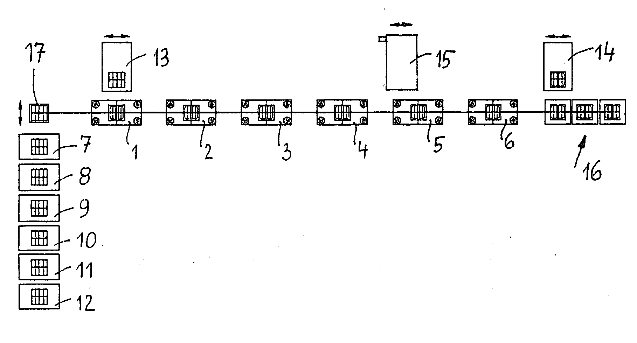

Nachstehend ist die Erfindung anhand eines in der Zeichnung dargestellten Ausführungsbeispieles näher beschrieben, ohne auf dieses Beispiel beschränkt zu sein. Dabei zeigt die Zeichnung das Anlageschema einer erfindungsgemäßen Anlage.

Das Presszentrum ist als Linearmaschine mit bis zu sechs Pressen 1 bis 6 in Reihe konzipiert, welche auf einem gemeinsamen Grundrahmen aufgebaut sind.

Die einzelnen Pressen 1 bis 6 des Zentrums arbeiten völlig unabhängig voneinander, verfügen jedoch über eine zentrale Magazineinheit mit sechs Magazinen 7 bis 12, einen gemeinsamen Beschickungsmanipulator 13 für die Rückenplatten, einen gemeinsamen Abnahmemanipulator 14 für die gepressten Beläge und eine gemeinsame Bürst- und Sprüheinheit 15. Der gemeinsame Abnahmemanipulator 14 holt die fertig gepressten Beläge von den einzelnen Pressen 1 bis 6 ab und legt diese an einer zentralen Ablage 16 geordnet ab.

Die Pressen 1 bis 6 werden in bekannter Weise aus Doppelwiegeautomaten mit Reibmasse und Zwischenschicht - Masse versorgt.

Die Rückenplatten werden aus der Magazineinheit mit den im Beispiel sechs Magazinen von einem Manipulator 17 entnommen und an den gemeinsamen Beschickungsmanipulator 13 übergeben. Dieser Beschickungsmanipulator 13 teilt die Rückenplatten der jeweiligen Presse 1 bis 6 zu.

Im Automatikbetrieb werden beim Start der Anlage zunächst die Pressformen mittels der Bürsteinheit 15 von anhaftenden Partikeln gereinigt und anschließend mit Trennmittel besprüht.

Die so vorbereiteten Pressformen werden sodann mit Reibmasse und, wenn gewünscht, auch mit Zwischenschichtmasse gleichmäßig befüllt.

Anschließend werden die aus einem der Magazine 7 bis 12 entnommenen Rückenplatten auf die Pressform aufgelegt, die entsprechende Presse 1 bis 6 geschlossen und der Presszyklus gestartet. Nach Ablauf des vorgewählten Presszyklus öffnet die jeweilige Presse 1 bis 6 und die fertigen Beläge werden vom Abnahmemanipulator 14 entnommen und zur zentralen Ablage 16 gebracht.

Während des Presszyklus werden sämtliche Prozessparameter lückenlos überwacht. Im Falle von Toleranzüberschreitung werden die Presslinge als fehlerhaft erkannt und automatisch ausgeschieden.

Die betroffene Presse 1 bis 6 wird abgeschaltet und kann erst nach Fehlerbehebung durch Drücken einer Quittierungstaste wieder zugeschaltet werden.

Maschinenstörungen sowie fehlerhafte Prozessabläufe werden durch Kontrollleuchten angezeigt.

Einzelne Pressen können wenn erforderlich bis zur Fehlerbehebung auch von Hand abgeschaltet werden.

Es ist im Rahmen der Erfindung auch möglich, einen Manipulator sowohl für die Beschickung als auch für die Abnahme anzuordnen. Dies dann, wenn die Härtezeit der gepressten Beläge lange genug ist, um dem Manipulator genügend Zeit zu geben, beide Arbeiten durchzuführen.

Es könnten auch mehr als sechs Magazine eingesetzt werden.

Als wesentliche Vorteile gegenüber bekannten Anlagen sind hevorzuheben:
Deutlich geringerer Platzbedarf gegenüber herkömmlichen Systemen;
bedienerfreundliche Eingabe von Rückenplatten durch die zentrale Magazineinheit, wodurch sich eine Zeit und Wegersparnis für den Bediener ergibt;
optimale Verknüpfungsmöglichkeit zu nachfolgenden Maschinen durch die zentrale Ablage.

## Patentansprüche

1. nlage zur Produktion von Bremsbelägen, mit einer Mehrzahl von in Linie angeordneten Pressen (1 bis 6), welche die in Pressform gefüllte Reibmasse nach Auflegen von Rückenplatten pressen, wobei eine zentrale Magazineinheit mit einem bis zu vorzugsweise sechs Magazinen (7 bis 12) angeordnet ist, **dadurch gekennzeichnet, dass** die Anlage ferner aufweist: einen gemeinsamen, jede Presse (1 bis 6) gesondert bedienenden Beschickungsmanipulator (13) für die Rückenplatten, einen gemeinsamen, mit dem Beschickungsmanipulator (13) eventuell vereinigten Abnahmemanipulator (14) für die gepressten Beläge, eine gemeinsame Bürst-Sprüheinheit (15), sowie eine zentrale Ablage (16) bzw. Übergabestelle für alle Beläge.

## Claims

1. A plant for the production of brake linings, with a plurality of presses (1 to 6) disposed in line, said presses pressing the friction composition filled into the press mould after the placing-on of back plates, wherein a central magazine unit is arranged with one up to preferably six magazines (7 to 12), **characterised in that** the plant further comprises: a common feed manipulator (13) for the back plates, said feed manipulator serving each press (1 to 6) separately, a common pick-up manipulator (14) for the pressed linings, said pick-up manipulator possibly being united with the feed manipulator (13), a common brush-spray unit (15), as well as a central depositing point (16) or transfer point for the linings.

## Revendications

1. Installation pour la production de garnitures de frein avec une pluralité de presses (1 à 6) disposées en ligne qui compriment la masse de frottement remplie dans le moule après mise en place des supports de garniture, une unité de magasin centrale étant disposée avec un jusqu'à de préférence six magasins (7 à 12) **caractérisé en ce que** l'installation présente en plus : un manipulateur de chargement (13) commun, servant en particulier à chaque presse (1 à 6) pour les supports de garniture, un manipulateur d'enlèvement (14) commun éventuellement réuni au manipulateur de chargement (13) pour les garnitures pressées, une unité de pulvérisation à brosse (15) commune, ainsi qu'un élément de réception (16) central ou emplacement de transfert pour toutes les garnitures.
